# EUROPEAN PATENT APPLICATION

(11) **EP 2 381 713 A1**
(43) Date of publication of application: **26.10.2011**
(21) Application number: 11163549.6
(22) Date of filing: 21.04.2011
(51) Int. Cl.: H04W 12/10, H04L 29/06

(54) **Apparatus and method for implementing a security mode configuration in a wireless communication device**

(30) Priority: 26.04.2010 US 327974 P
(71) Applicant: Research In Motion Limited, Waterloo, ON N2L 3W8 (CA)
(72) Inventor: Farnsworth, Andrew, Birmingham, B1 2RA (GB); Boley, Ajit Singh, Birmingham, B1 2RA (GB)
(74) Representative: Noble, Nicholas

(57) **Abstract**

An apparatus and a method for implementing a security mode configuration in a wireless communication device are disclosed.
The call setup delay or call drop can be avoided for the case that the terminal UE has received a downlink RRC message using the new security configuration while waiting for acknowledgement for Security Mode Complete message. The UE can consider the downlink RRC message as a confirmation of the fact that the RNC has received the Security Mode Complete message and has started using the new security configuration. The UE should perform successfully integrity check of the downlink RRC message before considering this message equivalent to the acknowledgement corresponding for Security Mode Complete message.

## Description

### BACKGROUND

This application relates to mobile telecommunications systems in general, having particular application in UMTS (Universal Mobile Telecommunications System) in general, and in particular relates to an Apparatus and Method for Implementing a Security Mode Configuration in a Wireless Communications Device.

In a typical cellular radio system, mobile user equipment (UE) communicates via one or more radio access radio networks (RANs) to one or more core networks. User equipment (UE) comprises various types of equipment such as mobile telephones (also known as cellular or cell phones), lap tops with wireless communication capability, personal digital assistants (PDAs) etc. These may be portable, hand held, pocket sized, installed in a vehicle etc and communicate voice and/or data signals with the radio access network.

In the following, reference will be made to UMTS and to particular standards. However it should be understood that the invention is not intended to be limited to any particular mobile telecommunications system.

A radio access network covers a geographical area typically divided into a plurality of cell areas. Each cell area is served by at least one base station, which in UMTS may be referred to as a Node B. Each cell is typically identified by a unique identifier which is broadcast in the cell. The base stations communicate at radio frequencies over an air interface with the UEs within range of the base station. Several base stations may be connected to a radio network controller (RNC) which controls various activities of the base stations. The radio network controllers are typically connected to a core network.

UMTS is a third generation public land mobile telecommunication system. Various standardization bodies are known to publish and set standards for third generation public land mobile telecommunication systems, each in their respective areas of competence. For instance, the 3GPP (Third Generation Partnership Project) in addition to publishing and set standards for UMTS, has been known to publish and set standards for GSM (Global System for Mobile Communications), and the 3GPP2 (Third Generation Partnership Project 2) has been known to publish and set standards for CDMA (Code Division Multiple Access). Within the scope of a particular standardization body, specific partners publish and set standards in their respective areas.

Consider a wireless mobile device, generally referred to as user equipment (UE), that complies with the 3GPP specifications for the UMTS protocol. The 3GPP 25.331 specification, v.6.24.0, referred to herein as the 25.331 specification and incorporated herein by reference, addresses the subject of UMTS RRC (Radio Resource Control) protocol requirements between the UMTS Terrestrial Radio Access Network (UTRAN) and the UE.

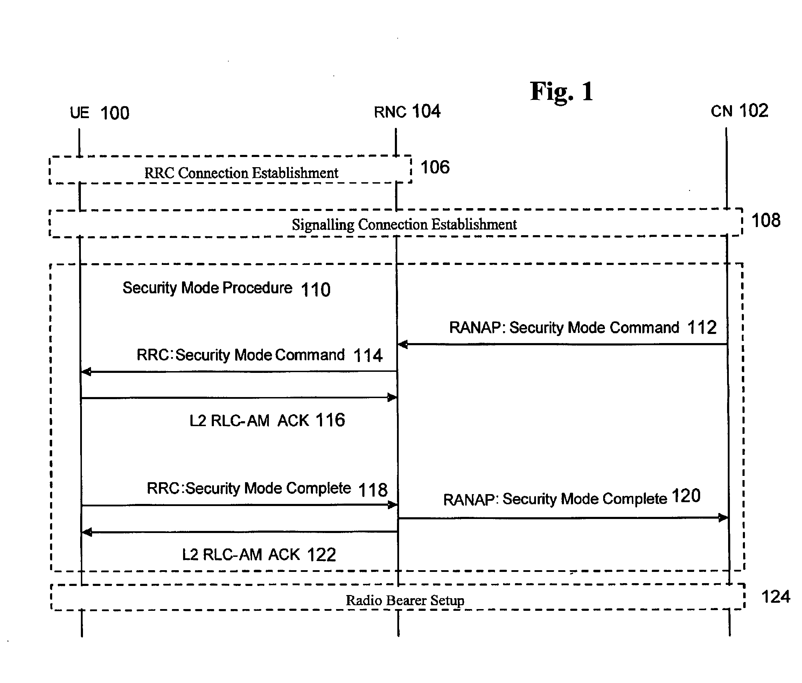

In accordance with clause 8.1.12 of the 25.331 specification, a security mode control procedure is classified between the UE and the UTRAN. The security consists of two aspects, optional ciphering and mandatory integrity protection. Ciphering provides encryption according to the ciphering configuration. Integrity protection provides protection against message manipulation in relation to message content and origin. For most present day implementations of UMTS networks, both ciphering and integrity protection are enabled during a call. A typical call setup is shown in figure 1. The RRC security mode procedure is executed between the UE and RNC for a specific core network (CN) domain (for example, the circuit switched core network domain that may be used for voice calls or the packet switched core network domain that may be used for packet calls or sessions) to setup and/or modify the ciphering and/or integrity protection configuration used during the call as shown in Fig. 1.

In interaction between the UE 100 and the core network 102 via the RNC 104, following RRC connection establishment 106 and signalling connection establishment 108 the security mode procedure commences. The core network 102 sends RANAP: Security Mode Command 112 to the RNC 104 which subsequently sends RCC: Security Mode Command 114 using the RRC protocol to the UE 100 on the downlink (DL). On the uplink (UL) the UE 100 sends acknowledgement message 116 to RNC and subsequently sends RRC security mode complete message 118. The RNC 104 sends security mode complete 120 to the CN 102 and sends an acknowledgement message 122 to the UE 100 after which the radio bearer set up processes 124 are instigated. The acknowledgement (ACK) messages 116 and 122 may be sent using the Layer 2 (L2) Radio Link Control (RLC) protocol operating in Acknowledged Mode (AM) and may also be referred to as L2 RLC-AM ACK messages, L2 acknowledgement messages, or RLC acknowledgement messages.

During the Security Mode procedure the RNC RRC layer cannot ascertain when the UE has received the L2 acknowledgement 122 for the RRC: Security Mode Complete message and hence it is not aware when the RRC security mode procedure will be completed at the UE. The UE suspends UL messages on all signalling radio bearers (SRBs) except SRB2 until receipt of the L2 acknowledgement ACK message 122 is received. If the completion of RRC Security Mode Control procedure is based on different specific triggering points in the respective peer entities then this can lead to potential security mismatch between the UE and the RNC under certain scenarios. Such a security mismatch between the UE and RNC could lead to call setup delay or call drop depending on UTRAN implementations. Further problems with existing apparatus are described in the 3GPP 25.815 specification section 6.3, and are addressed by re-initiation techniques, ignoring certain messages or aborting procedures.

There are thus proposed strategies for an Apparatus and Method for Implementing a Security Mode Configuration in a Wireless Communications Device.

Other aspects and features of the proposed strategy will become apparent to those ordinarily skilled in the art upon review of the following description of specific embodiments of an apparatus and method for Apparatus and Method for Implementing a Security Mode Configuration in a Wireless Communications Device.

### BRIEF DESCRIPTION OF THE DRAWINGS

Embodiments will now be described, by way of example only, with reference to the attached drawings, in which:

Fig. 1 is a high level diagram showing a security mode procedure;

Fig. 2 is a high level diagram showing the effect of acknowledgement delay in a security mode procedure;

Fig. 3 is a diagram showing in more detail the effects of acknowledgment delay in a security mode procedure;

Fig. 4 is a diagram showing the effects of acknowledgment delay according to one aspect of security mode procedure;

Fig. 5 is a diagram showing the effects of acknowledgment delay according to a second aspect of security mode procedure;

Fig. 6 is a flow diagram illustrating steps performed according to aspects of the approach described herein;

Fig. 7 shows an overview of a network and a UE device;

Fig. 8 is a block diagram illustrating an embodiment of a protocol stack provided in a UE; and

Fig. 9 is a block diagram illustrating a mobile device.
The same reference numerals are used in different figures to denote similar elements.

### DETAILED DESCRIPTION OF THE DRAWINGS

Apparatus and Method for Implementing a Security Mode Configuration in a Wireless Communications Device is described. In the following description, for the purposes of explanation, numerous specific details are set forth in order to provide a thorough understanding of the present invention. It will be apparent, however, to one skilled in the art that the technique may be practised without these specific details. In other instances, well-known structures and devices are shown in block diagram form in order to avoid unnecessarily obscuring the present invention.

The needs identified in the foregoing Background, and other needs and objects that will become apparent from the following description, are achieved by, in one aspect, a method for an Apparatus and Method for Implementing a Security Mode Configuration in a Wireless Communications Device. In other aspects, the invention encompasses apparatus and a computer-readable medium configured to carry out the foregoing actions, as well as a data carrier carrying thereon or therein data indicative of instructions executable by processing means to cause those means to carry out the foregoing actions. Examples are CD-ROMs, memory sticks, dongles, transmitted signals, downloaded files etc. In particular, the method may be implemented in a mobile telecommunications device, with or without voice capabilities, or other electronic devices such as handheld or portable devices.

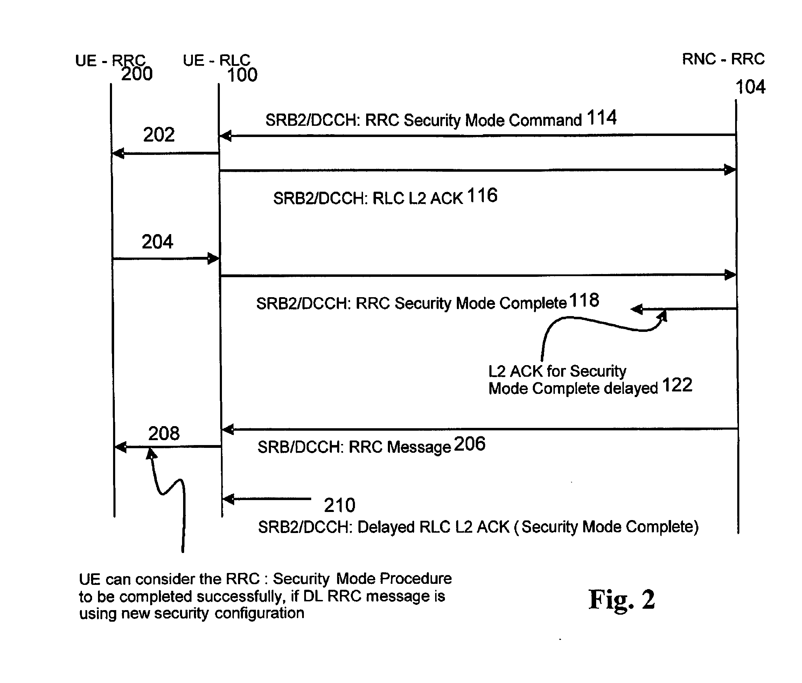

In overview existing problems are overcome according to the approaches described below. In the diagram of Fig. 2 and consequent figures, like reference numerals denote like components/messages and are not described unless repetition is required.

Mobility of the UE and RRC signalling following the RRC Security mode procedure are fundamental aspects which need to be handled by the UE while waiting for L2 acknowledgement for RRC: Security Mode Complete. Under existing proposals as discussed further below, UE mobility may cause a cell reselection that in turn causes initiation of an RRC Cell Update procedure resulting in fallback to old security configuration as used before the reception of the RCC: Security Mode Command. The subsequent RRC signalling causes the UE to switch to new security configuration on SRB(s) other than SRB 2, but corresponding uplink response is queued at the UE due to suspension of transmissions on these SRBs until the ongoing procedure is considered complete at the UE.

In particular, according to the approach described herein, where UE has received a downlink RRC message 206 such as a DCCH or CCCH message using the new security configuration while waiting for L2 acknowledgement 210 for RRC: Security Mode Complete 118 as shown in Figure 2, the call setup delay or call drop could be avoided. The UE can consider the downlink RRC message 206 as a confirmation of the fact that the RNC has received the RRC: Security Mode Complete 118 and has started using the new security configuration. The UE should successfully integrity check the downlink RRC message 206 before considering the downlink RRC message 206 equivalent to L2 acknowledgement 210 corresponding for RRC : Security Mode Complete 118.

The reception of downlink RRC message with new security configuration minimizes the time window in which the RRC Security mode procedure can be considered to be completed at the RNC but not yet completed on the UE for example in the case of a delayed L2 acknowledgement message 122, 210. The possibility of call drop due to UE mobility or call setup delay is thus reduced.

Turning to the approaches in more detail, the security mode is described in section 8.1.12 of the 3GPP Technical Specification (TS) 25.331.

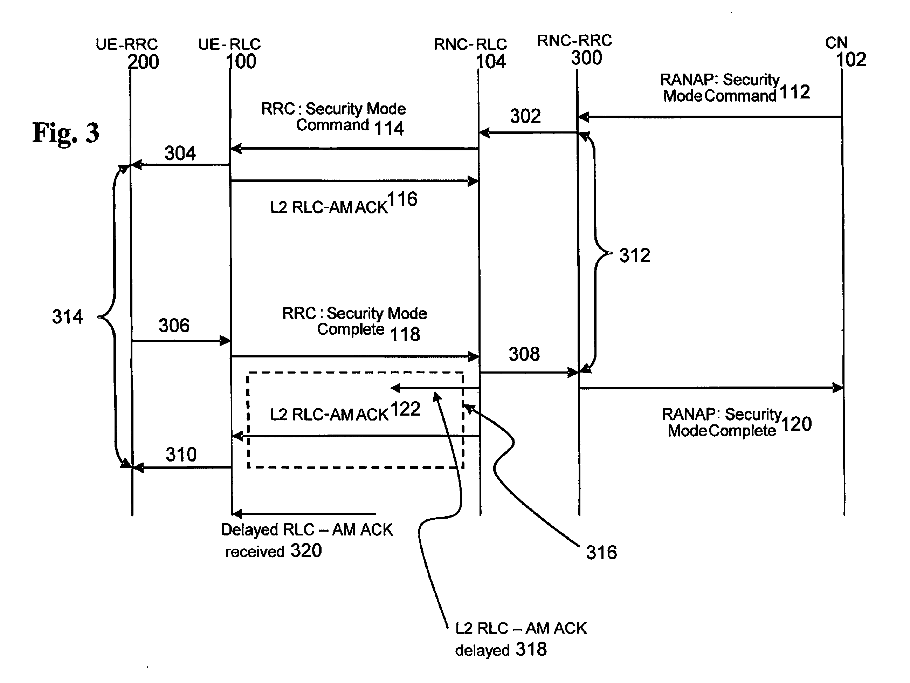

Fig. 3 shows communication between upper and lower layers 100, 200; 102, 300 in the UE and RNC including messages 302 and 308 between the RNC-RLC and RNC-RRC. Additionally messages 304 and 306 are shown between the UE-RRC and UE-RLC. For the UE, the RRC security mode procedure starts with receiving of RRC: Security Mode Command 114 message from the RNC 104 as shown in figure 3. The new security configuration consists of new integrity protection and new ciphering configurations. The RRC: Security Mode Command 114 message informs the UE 100 when the new security configuration will be activated in the downlink by the RNC 104. The RRC: Security Mode Command message 114 is integrity protected using the new integrity configuration, and is either not ciphered or if ciphering is already active for the call ciphered using the old ciphering configuration.

The UE 100 performs the Security mode control procedure in accordance with section 8.1.12 of the 25.331 specification and in particular performs actions on receipt of the RRC: Security Mode Command message as per section 8.1.12.3. Handling of specific information elements (IEs) as received within the RRC: Security Mode Command message 114 is as per section 8.6.3 of the 25.331 specification. Specifically on receiving the IE "Ciphering mode info" the UE suspends sending of further uplink RRC messages on all radio bearers except SRB 2 due to reception of the new ciphering configuration. In addition as per section 8.6.3.5 of the 25.331 specification, the UE 100 does not send any uplink RRC messages on any signalling radio bearer except SRB2 due to the new integrity configuration. The UE 100 responds with RRC : Security Mode Complete message 118 to the RNC 104 sent over SRB 2, which informs the RNC 104 when the new integrity and ciphering configuration will be activated by the UE 100 in the uplink. The RRC: Security Mode Complete message 118 is integrity protected using the new integrity configuration.

On receiving L2 acknowledgement 122 for the RRC: Security Mode Complete message 118, the UE 100 performs further actions based on the contents of RRC: Security Mode Command message 114 as per section 8.1.12.3 of the 25.331 specification. After this the UE 100 resumes sending of further uplink RRC messages on all suspended radio bearers and the RRC security mode procedure ends.

From the RNC 104 perspective and in accordance with section 8.1.12.2 of the 25.331 specification, it configures the RRC: Security Mode Command message 114 to setup or modify the ciphering and integrity configuration for the UE 100. It suspends transmission of downlink RRC messages on all radio bearers except SRB 2, on which it sends the RRC: Security Mode Command message 114 to the UE 100. When the RNC receives RRC: Security Mode Complete message 118 from the UE 100, it acts on the contents of the message as per section 8.1.12.5 of the 25.331 specification, and then resumes transmission of downlink RRC messages on all suspended radio bearers and starts using the new security configuration for subsequent downlink RRC messages.

UE implementations are bound to the 25.331 specification compliance for L3 RRC protocol used between the UE 200 and the RNC 300 in the UTRAN. The specification recommends the UE 100 not to discard downlink RRC message received with the new security configuration while waiting for L2 acknowledgement 122 corresponding to RRC: Security Mode Complete message 118. It further requires UE 100 to wait for L2 acknowledgement 122 corresponding to RRC: Security Mode Complete message 118 for all cases and then perform actions as per section 8.1.12.3 of the 25.331 specification leading to the completion of RRC security mode procedure at the UE 100. Any delay of the L2 acknowledgement 122 increases the window 316 between completion of the security procedure 312 at the RNC and the security procedure 314 at the UE, that is, when the RNC 104 considers the RRC security mode procedure as complete 118 (reception of the UE transmitted RRC: Security Mode Complete message 118) and when the procedure is considered complete at the UE 100 - 314. This gives rise to various problems.

As discussed above the UE should accept RRC downlink messages from the RNC using the new security configuration while waiting for the L2 acknowledgment 112 for RRC: Security Mode Complete message 118. On receiving RRC: Security Mode Complete message 118, the RNC 104 can start sending subsequent downlink RRC messages which command the UE 100 to perform further Radio Resource Control or Call Control functions. The RRC Security Mode Control procedure is always followed by further RRC signalling. For example, during typical packet switched (PS) domain call setup procedures the RRC Radio Bearer Setup procedure is executed following the RRC Security Mode Control procedure. During typical circuit switched (CS) domain call setup procedures the RRC Downlink Direct Transfer procedure carrying NAS Call Control messages will follow the RRC Security Mode Control procedure. For non-radio bearer calls like SMS, the Security Mode Control procedure is typically followed by the RRC Downlink Direct Transfer procedure.

The recommendation to accept these subsequent downlink RRC messages relating to these ongoing procedures can require the UE 100 to switch to the new security configuration in the downlink for SRB(s). For the RRC messages received on the SRB(s) which require the UE 100 to respond using SRB(s) other than SRB2, the UE 100 cannot send the corresponding response on the corresponding uplink response message as the SRB is suspended or stopped due to the ongoing Security Mode Control procedure completion. As indicated above the UE 100 will determine the RRC Security Mode Control procedure complete on reception of the L2 acknowledgement 122 message after which it will reactivate the suspended SRB(s). In the meantime if the response from the UE 100 to the subsequent downlink RRC messages is delayed for too long, then this may lead the RNC 104 to release the call.

The following are example scenarios highlighting the affect of delays in the reception of the L2 acknowledgement 318 to the RRC: Security Mode Complete message 118 and crossover from downlink RRC messages using new security configurations.

### Example 1

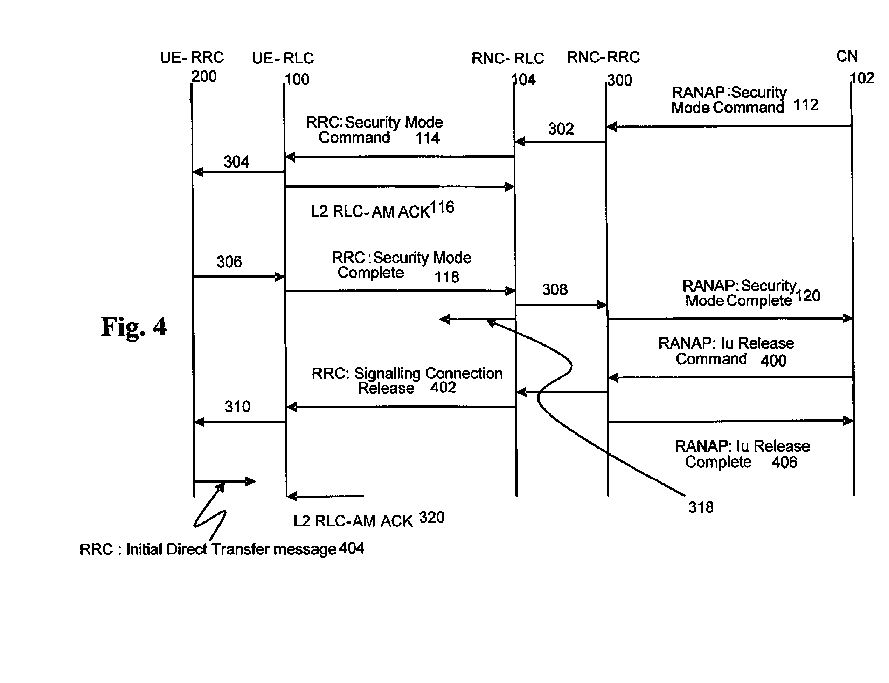

Referring to Fig. 4, if the DL RRC message is RRC: Signalling Connection Release 402 triggered by RANAP: lu Release Command 400 from the CN102, then the signalling connection for the domain is released as shown in figure 4 and the RANAP receives message RANAP: lu Release Command 406, but the UE 100 considers the RRC Security Mode Control procedure is incomplete for that domain. The User Equipment 100 may subsequently initiate a signalling connection from the same domain still before the RRC Security Mode Control procedure is complete. The initiation of signalling connection requires UE to transmit RRC: Initial Direct Transfer message 404 on SRB3 as shown in figure 4. As per section 8.6.3.5.3 of the 25.331 specification, the UE would have informed the RNC regarding activation of new security configuration at the next RRC sequence number for SRB3. Until the RRC security mode is completed by the reception of corresponding L2 acknowledgement 320, a 3GPP complaint UE 100 would not transmit the RRC: Initial Direct Transfer message to the RNC causing call initiation delay at the UE and eventually poor user experience.

### Example 2

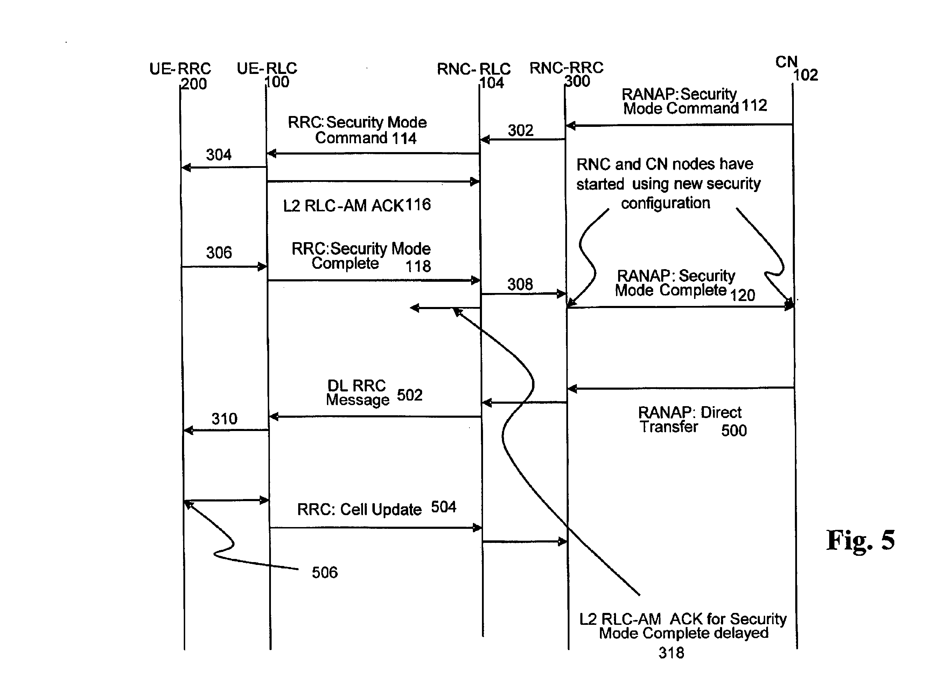

Referring to Fig. 5 the CN may have triggered RANAP: Direct Transfer 500, causing an RNC DL RCC Message to initiate message 506 and RRC Cell Update procedure 504, while waiting for the L2 RLC-AM ACK 318 for RRC: Security Mode Complete message 118. Example triggers that may cause the initiation of the Cell Update procedure are cell reselection if the UE is within the CELL_FACH RRC state and radio link failure if the UE is in CELL_DCH RRC state. Both example triggers may occur as a result of mobility of the UE. The initiation of RRC: Cell Update procedure according to the 25.331 specification section 8.1.12.4b will cause the UE to revert back to the security configuration used prior to receiving the RRC: Security Mode Command message as shown in figure 5. The initiation of RRC Cell Update procedure 504 may occur in the UE after the UE has sent the RRC: Security Mode Complete message but before the L2 acknowledgement has been received from the RNC, causing the UE to revert to the old security configuration 506. The RRC: Security Mode Complete message received by the RNC results in sending of RANAP: Security Mode Complete 120 to the Core Network Nodes (i.e MSC or SGSN) as shown in figure 5. The UTRAN cannot abort the security mode procedure anymore as there is no way to notify the Core Network Node to reverse this step. If the RNC receives RRC: Cell Update 504 with the old security, then it leads to a situation where the UTRAN and the UE can be validly using different security configurations.

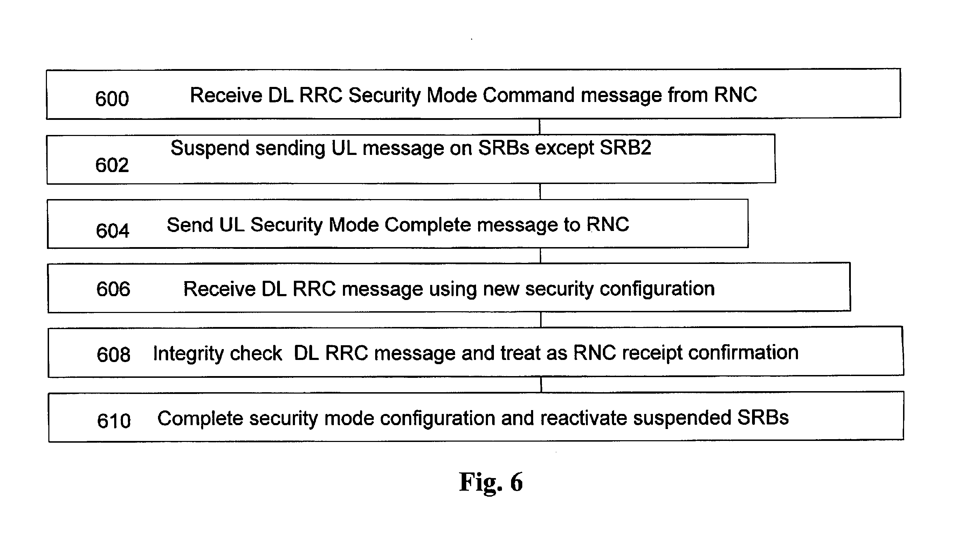

The solution according to the approach described herein can be understood with reference to Fig. 6 which is a flow diagram illustrating steps implemented according to the method performed at the UE. At step 600 the UE receives the RRC: Security Mode Command message from the RNC. At step 602, according to the 25.331 specification for example, the UE suspends sending uplink messages on all UM and AM SRBs except SRB2 (e.g. it suspends SRB1, 3 and 4 (if present)). At step 604 the UE sends the RRC: Security Mode Complete message to the RNC. At step 606 the UE receives a downlink RRC message, for example one of the messages specified above for another ongoing RRC procedure, using the new security configuration. At step 608 the UE integrity checks the downlink RRC message according to the new security configuration received in the RRC Security mode command message received at step 600 and treats it as an RNC receipt confirmation if the integrity check is successful. It is noted that ciphering according to the security mode may not yet have been implemented but the message will still be treated as confirmation This RNC receipt confirmation may be considered as equivalent to the reception of a L2 acknowledgement for the RRC security mode complete message. Accordingly at step 610 the UE can complete the security mode configuration, resume (reactivate) the suspended SRBs and perform the appropriate subsequent steps.

As a result a simple and reliable approach is provided for implementing and completing security mode configuration. With the approach the UE may not have to wait for specific L2 acknowledgement message and therefore reduces the risks associated with potential delay of such an L2 acknowledgement message. The approach described reduces the occurrences re-initiation, ignoring of existing messages or the likelihood of aborting processes or steps. Hence, according to the approaches discussed herein, the steps taken according to section 8.1.12.3 of the 25.331 specification are implemented when the successful delivery of the SECURITY MODE COMPLETE message has been confirmed by the RLC (UE) or when the UE has successfully integrity checked a downlink RRC message using the new security configuration. Whilst the downlink RRC message can be sufficient to confirm successful delivery of Security Mode Complete to the UTRAN, if received before the corresponding layer 2 acknowledgement it will be noted that a layer 2 acknowledgement message can be sufficient to confirm successful delivery if received before a DL RRC message.

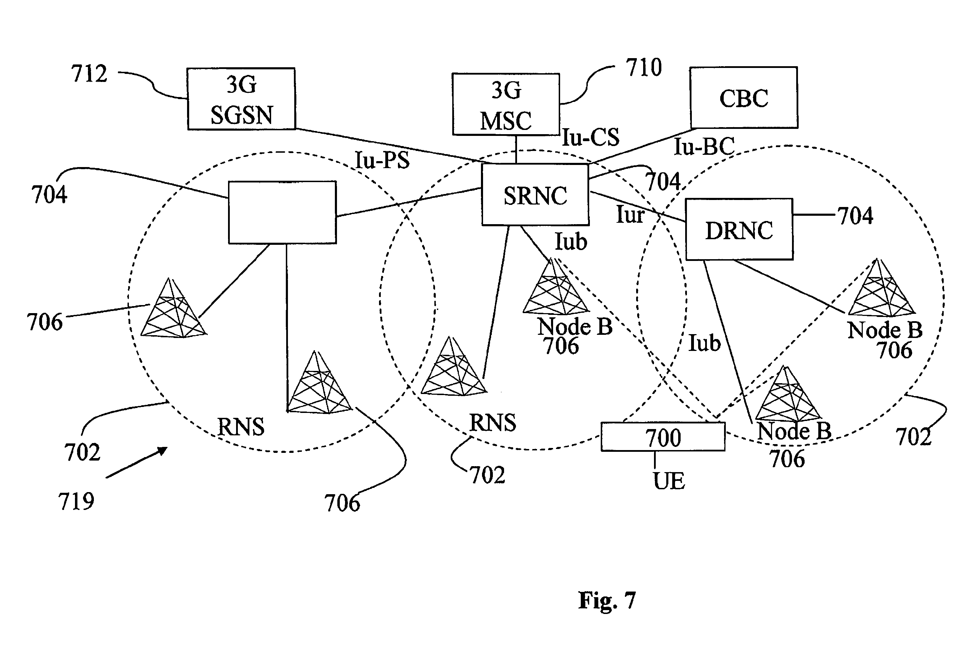

Figure 7 shows an overview of a network and a UE device. Clearly in practice there may be many UE devices operating with the network but, for the sake of simplicity, Figure 7 only shows a single UE device 700. For the purposes of illustration, Figure 7 also shows a network 719 having a few components. It will be clear to a person skilled in the art that in practice a network will include far more components than those shown.

Figure 7 shows an overview of the radio access network 719 (UTRAN) used in a UMTS system. The network 719 as shown in Figure 7 comprises three Radio Network Subsystems (RNS) 2. Each RNS has a Radio Network Controller (RNC) 4. Each RNS 2 has one or more Node B 6 which are similar in function to a Base Transmitter Station of a GSM radio access network. User Equipment UE 700 may be mobile within the radio access network. Radio connections (indicated by the straight dotted lines in Figure 7) are established between the UE and one or more of the Node Bs in the UTRAN.

The radio network controller controls the use and reliability of the radio resources within the RNS 2. Each RNC may also connected to a 3G mobile switching centre 10 (3G MSC) and a 3G serving GPRS support node 12 (3G SGSN).

An RNC 4 controls one or more Node B's. An RNC plus its Node B's together make up an RNS 2. A Node B controls one or more cells. Each cell is uniquely identified by a frequency and a primary scrambling code (primary CPICH in FDD, primary CCPCH in TDD).

Generally in UMTS a cell refers to a radio network object that can be uniquely identified by a UE from a cell identifier that is broadcast over geographical areas from a UTRAN access point. A UTRAN access point is a conceptual point within the UTRAN performing radio transmission and reception. A UTRAN access point is associated with one specific cell i.e., there exists one UTRAN access point for each cell. It is the UTRAN-side end point of a radio link. A single physical Node B 6 may operate as more than one cell since it may operate at multiple frequencies and/or with multiple scrambling codes.

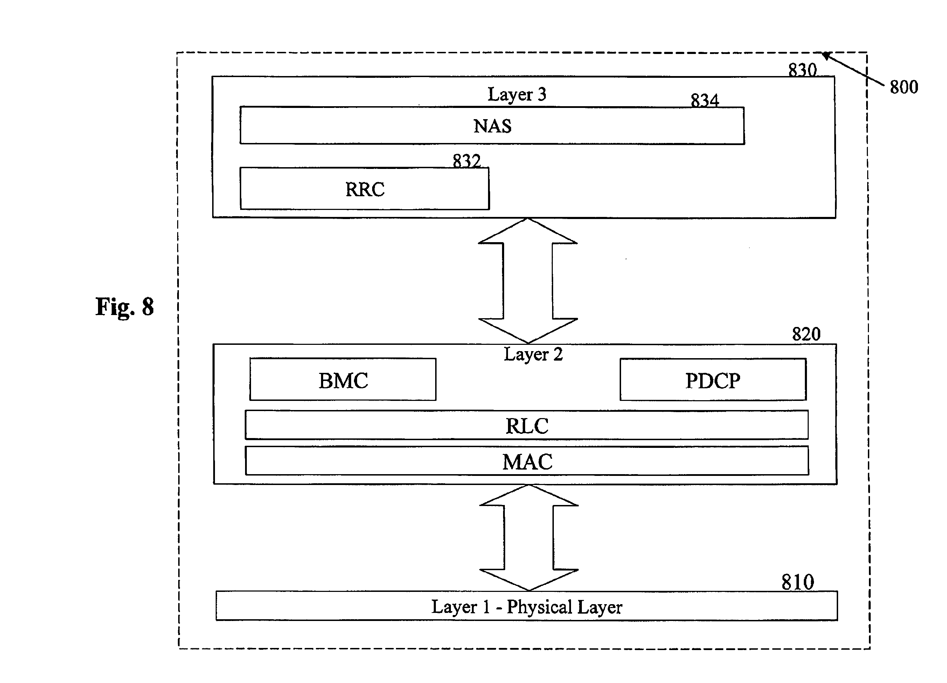

Figure 8 is a block diagram illustrating an embodiment of a protocol stack provided in a UE. A Radio Resource Controller (RRC) block 832 is a sub layer of Layer 3 830 of a UMTS protocol stack 800. The RRC 832 exists in the control plane only and provides an information transfer service to the non-access stratum NAS 834. The RRC 832 is responsible for controlling the configuration of radio interface Layer 1 810 and Layer 2 820. When the UTRAN wishes to change the UE configuration it will issue a message to the UE containing a command to invoke a specific RRC procedure. The RRC layer 832 of the UE decodes this message and initiates the appropriate RRC procedure. Generally when the procedure has been completed (either successfully or not) then the RRC sends a response message to the UTRAN (via the lower layers) informing the UTRAN of the outcome. It should be noted that there are a few scenarios where the RRC will not issue a response message to the UTRAN and, in those cases the RRC need not and does not reply.

The strategies for an Apparatus and Method for Implementing a Security Mode Configuration in a Wireless Communications Device as discussed above with reference to the drawings may be implemented by the RRC block 832.

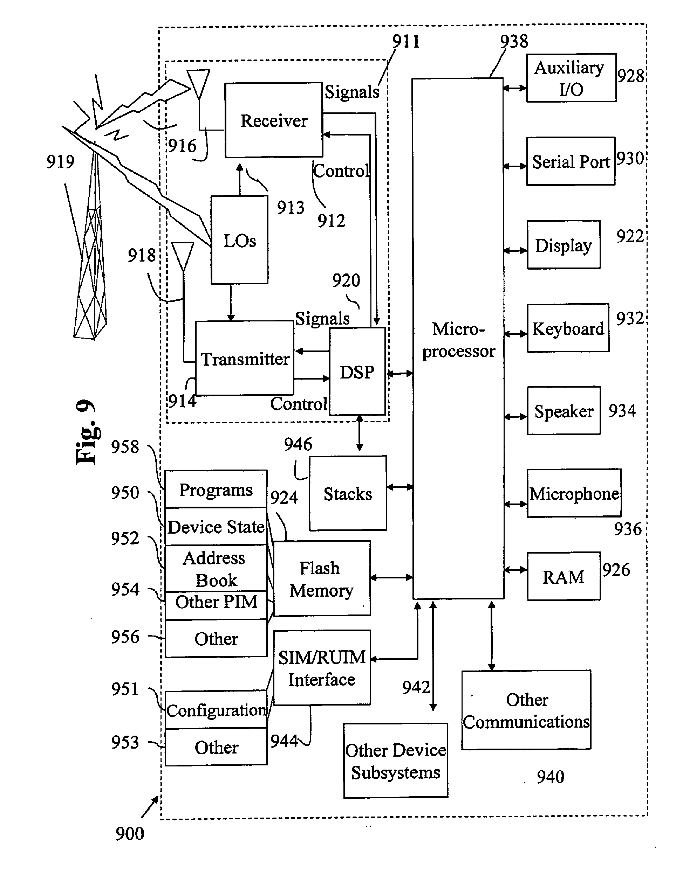

Turning now to Figure 9, Figure 9 is a block diagram illustrating a mobile device, which can act as a UE and co-operate with the apparatus and methods of Figures 1 to 8, and which is an exemplary wireless communication device. Mobile station 900 is preferably a two-way wireless communication device having at least voice and data communication capabilities. Mobile station 900 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 900 is enabled for two-way communication, it will incorporate a communication subsystem 911, including both a receiver 912 and a transmitter 914, as well as associated components such as one or more, preferably embedded or internal, antenna elements 916 and 918, local oscillators (LOs) 913, and processing means such as a processing module such as a digital signal processor (DSP) 20. As will be apparent to those skilled in the field of communications, the particular design of the communication subsystem 911 will be dependent upon the communication network in which the device is intended to operate. For example, mobile station 900 may include a communication subsystem 911 designed to operate within the Mobitex™ mobile communication system, the DataTAC™ mobile communication system, GPRS network, UMTS network, EDGE network or LTE network.

Network access requirements will also vary depending upon the type of network 902. For example, in the Mobitex and DataTAC networks, mobile station 900 is registered on the network using a unique identification number associated with each mobile station. In LTE, UMTS and GPRS networks, however, network access is associated with a subscriber or user of mobile station 900. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 900 will be unable to carry out any other functions involving communications over the network 902. The SIM interface 944 is normally similar to a card-slot into which a SIM card can be inserted and ejected like a diskette or PCMCIA card. The SIM card can have approximately 64K of memory and hold many key configuration 951, and other information 953 such as identification, and subscriber related information.

When required network registration or activation procedures have been completed, mobile station 900 may send and receive communication signals over the network 902. Signals received by antenna 916 through communication network 902 are input to receiver 912, which may perform such common receiver functions as signal amplification, frequency down conversion, filtering, channel selection and the like, and in the example system shown in Figure 9, analog to digital (A/D) conversion. A/D conversion of a received signal allows more complex communication functions such as demodulation and decoding to be performed in the DSP 920. In a similar manner, signals to be transmitted are processed, including modulation and encoding for example, by DSP 920 and input to transmitter 914 for digital to analog conversion, frequency up conversion, filtering, amplification and transmission over the communication network 902 via antenna 918. DSP 920 not only processes communication signals, but also provides for receiver and transmitter control. For example, the gains applied to communication signals in receiver 912 and transmitter 914 may be adaptively controlled through automatic gain control algorithms implemented in DSP 920.

Mobile station 900 preferably includes processing means such as a microprocessor 938 which controls the overall operation of the device. Communication functions, including at least data and voice communications, are performed through communication subsystem 911. Microprocessor 938 also interacts with further device subsystems such as the display 922, flash memory 924, random access memory (RAM) 926, auxiliary input/output (I/O) subsystems 928, serial port 930, keyboard 932, speaker 934, microphone 936, a short-range communications subsystem 940 and any other device subsystems generally designated as 942.

Some of the subsystems shown in Figure 9 perform communication-related functions, whereas other subsystems may provide "resident" or on-device functions. Notably, some subsystems, such as keyboard 932 and display 922, for example, may be used for both communication-related functions, such as entering a text message for transmission over a communication network, and device-resident functions such as a calculator or task list.

Operating system software used by the microprocessor 938 is preferably stored in a persistent store such as flash memory 924, which may instead be a read-only memory (ROM) or similar storage element (not shown). Those skilled in the art will appreciate that the operating system, specific device applications, or parts thereof, may be temporarily loaded into a volatile memory such as RAM 926. Received communication signals may also be stored in RAM 926.

As shown, flash memory 924 can be segregated into different areas for both computer programs 958 and program data storage 950, 952, 954 and 956. These different storage types indicate that each program can allocate a portion of flash memory 924 for their own data storage requirements. Microprocessor 938, in addition to its operating system functions, preferably enables execution of software applications on the mobile station. A predetermined set of applications that control basic operations, including at least data and voice communication applications for example, will normally be installed on mobile station 900 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 902. In a preferred embodiment, the PIM data items are seamlessly integrated, synchronized and updated, via the wireless network 902, with the mobile station user's corresponding data items stored or associated with a host computer system. Further applications may also be loaded onto the mobile station 900 through the network 902, an auxiliary I/O subsystem 928, serial port 930, short-range communications subsystem 940 or any other suitable subsystem 942, and installed by a user in the RAM 926 or preferably a non-volatile store (not shown) for execution by the microprocessor 938. Such flexibility in application installation increases the functionality of the device and may provide enhanced on-device functions, communication-related functions, or both. For example, secure communication applications may enable electronic commerce functions and other such financial transactions to be performed using the mobile station 900.

In a data communication mode, a received signal such as a text message or web page download will be processed by the communication subsystem 911 and input to the microprocessor 938, which preferably further processes the received signal for output to the display 922, or alternatively to an auxiliary I/O device 928. A user of mobile station 900 may also compose data items such as email messages for example, using the keyboard 932, which is preferably a complete alphanumeric keyboard or telephone-type keypad, in conjunction with the display 922 and possibly an auxiliary I/O device 928. Such composed items may then be transmitted over a communication network through the communication subsystem 911.

For voice communications, overall operation of mobile station 900 is similar, except that received signals would preferably be output to a speaker 934 and signals for transmission would be generated by a microphone 936. Alternative voice or audio I/O subsystems, such as a voice message recording subsystem, may also be implemented on mobile station 900. Although voice or audio signal output is preferably accomplished primarily through the speaker 934, display 922 may also be used to provide an indication of the identity of a calling party, the duration of a voice call, or other voice call related information for example.

Serial port 930 in Figure 9, would normally be implemented in a personal digital assistant (PDA)-type mobile station for which synchronization with a user's desktop computer (not shown) may be desirable, but is an optional device component. Such a port 930 would enable a user to set preferences through an external device or software application and would extend the capabilities of mobile station 900 by providing for information or software downloads to mobile station 900 other than through a wireless communication network. The alternate download path may for example be used to load an encryption key onto the device through a direct and thus reliable and trusted connection to thereby enable secure device communication.

Other communications subsystems 940, such as a short-range communications subsystem, is a further optional component which may provide for communication between mobile station 900 and different systems or devices, which need not necessarily be similar devices. For example, the subsystem 940 may include an infrared device and associated circuits and components or a Bluetooth™ communication module to provide for communication with similarly enabled systems and devices.

When mobile device 900 is used as a UE, protocol stacks 946 include apparatus and a method for an Apparatus and Method for Implementing a Security Mode Configuration in a Wireless Communications Device.

In the foregoing specification, the invention has been described with reference to specific embodiments thereof. It will, however, be evident that various modifications and changes may be made thereto without departing from the scope of the technique. The specification and drawings are, accordingly, to be regarded in an illustrative rather than a restrictive sense.

It is to be noted that the methods as described have actions being carried out in a particular order. However, it would be clear to a person skilled in the art that the order of any actions performed, where the context permits, can be varied and thus the ordering as described herein is not intended to be limiting.

It is also to be noted that where a method has been described it is also intended that protection is also sought for a device arranged to carry out the method and where features have been claimed independently of each other these may be used together with other claimed features.

Furthermore it will be noted that the apparatus described herein may comprise a single component such as a UE or UTRAN or other user equipment or access network components, a combination of multiple such components for example in communication with one another or a sub-network or full network of such components.

Embodiments have been described herein in relation to 3GPP specifications. However the method and apparatus described are not intended to be limited to the specifications or the versions thereof referred to herein but may be applicable to future versions or other specifications.

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyright rights whatsoever.

## Claims

1. A method, in a wireless communication device, of implementing a security mode configuration comprising sending an uplink message indicating security mode configuration complete, receiving a downlink message configured according to one or more aspects of the security mode, and treating the received message as confirmation that the uplink message has been received.

2. A method as claimed in claim 1 further comprising performing an integrity protection check on the received downlink message and treating the received downlink message as confirmation that the uplink message has been received if the integrity check is successful.

3. A method as claimed in claim 1 in which at least one of:
the security mode configuration is a new security mode configuration and the received message is treated as confirmation that the uplink message has been received if it is configured according to the new security mode configuration; and
the security mode configuration is implemented according to RRC security mode procedure.

4. A method as claimed in claim 1 in which the uplink message is sent to RNC and the downlink message is received from RNC, preferably wherein the uplink message is:
RRC security mode complete.

5. A method as claimed in claim 1 in which, if a downlink message acknowledging receipt of the uplink message indicating security mode configuration complete is received before a downlink message configured according to the security mode, the downlink message acknowledging receipt is treated as confirmation that the uplink message has been received.

6. A method as claimed in claim 1 in which, once confirmation that the uplink message has been received is made, the wireless communication device completes security mode configuration, preferably wherein at least one of:
once confirmation that the uplink message has been received is made, the wireless communication device resumes any suspended radio bearers; and
once confirmation that the uplink message has been received is made, the wireless communication device implements any new integrity or ciphering configuration.

7. A method as claimed in claim 1 in which aspects of the security mode include integrity and ciphering.

8. A wireless communication device comprising:
a transceiver for transmitting and receiving signals;
a processor; and
a memory having stored therein: one or more routines executable by the processor, having one or more routines being adapted, while implementing a security mode configuration, to:
send an uplink message indicating security mode configuration complete;
receive a downlink message configured according to one or more aspect of the security mode; and
treat the received message as confirmation that the uplink message has been received.

9. A device as claimed in claim 8 further adapted to perform an integrity protection check on the received downlink message and treat the received downlink message as confirmation that the uplink message has been received if the integrity check is successful.

10. A device as claimed in claim 8 in which at least one of:
the security mode configuration is a new security mode configuration and the received message is treated as confirmation that the uplink message has been received if it is configured according to the new security mode configuration; and
the security mode configuration is implemented according to RRC security mode procedure.

11. A device as claimed in claim 8 in which the uplink message is sent to RNC and the downlink message is received from RNC, preferably wherein the uplink message is RRC security mode complete.

12. A device as claimed in claim 8 in which, if a downlink message acknowledging receipt of the uplink message indicating security mode configuration complete is received before a downlink message configured according to the security mode, the downlink message acknowledging receipt is treated as confirmation that the uplink message has been received.

13. A device as claimed in claim 8 in which, once confirmation that the uplink message has been received is made, the wireless communication device completes security mode configuration, preferably wherein at least one of:
once confirmation that the uplink message has been received is made, the wireless communication device resumes any suspended signalling radio bearers; and
once confirmation that the uplink message has been received is made, the wireless communication device implements any new integrity or ciphering configuration.

14. A device as claimed in claim 8 in which aspects of the security mode include integrity and ciphering.

15. A computer readable medium having computer executable construction adapted to cause the device to perform a method of any of claims 1 to 7.
